# EUROPÄISCHE PATENTSCHRIFT

(11) **EP 3 845 791 B1**
(45) Veröffentlichungstag und Bekanntmachung des Hinweises auf die Patenterteilung: **14.12.2022**
(21) Anmeldenummer: 21150021.0
(22) Anmeldetag: 04.01.2021
(51) Int. Cl.: F16L 37/092, F16L 33/22

(54) **FITTING**
FITTING
RACCORD

(30) Priorität: 06.01.2020 DE 102020100096
(43) Veröffentlichungstag der Anmeldung: 07.07.2021
(73) Patentinhaber: HENCO Industries NV, 2200 Herentals (BE)
(72) Erfinder: Faes, Michael, 2270 Herenthout (BE); Schuermans, Gert, 2243 Pulle (BE)
(74) Vertreter: Gosdin, Carstensen & Partner Patentanwälte Partnerschaftgesellschaft mbB

(56) Entgegenhaltungen:
- WO-A1-2019/048460
- DE-U1-202011 103 877
- JP-A- 2003 314 775
- JP-B2- 5 286 129

## Beschreibung

Die Erfindung betrifft ein Fitting, insbesondere für den Sanitärbereich, umfassend einen Grundkörper mit zumindest einem rohrförmigen Anschlussstück, welches jeweils einem Aufschieben eines Endes je eines Rohrs dient, wobei das zumindest eine Anschlussstück mit jeweils einer umlaufenden Nut versehen ist, in welcher je ein Dichtungselement platziert ist, wobei radial umliegend zum zumindest einen Anschlussstück jeweils ein Schutzelement vorgesehen ist, welches durch Aufschieben des Endes des je einen Rohres axial aus einer ersten Position, in der das jeweils eine Schutzelement die jeweilige Nut zumindest teilweise abdeckt und dabei mit dem jeweiligen Dichtungselement in Kontakt steht, in eine zweite Position verschiebbar ist, in welcher das jeweils eine Schutzelement die Nut freigibt und der Kontakt zum Dichtungselement aufgehoben ist, und wobei dem zumindest einen Anschlussstück jeweils ein Sicherungselement zugeordnet ist, welches einem axialen Fixieren des je einen Rohres in dessen auf das zumindest eine Anschlussstück aufgeschobenen Endlage dient, wobei das Schutzelement radial innenliegend zu dem Sicherungselement angeordnet und dabei in dem Sicherungselement zwischen den Positionen axial verschiebbar geführt ist, wobei an dem Grundkörper je eine Hülse befestigt ist, die radial umliegend zu dem zumindest einen Anschlussstück, dem je einen Schutzelement und dem je einen Sicherungselement vorgesehen ist und sich axial über das zumindest eine Anschlussstück hinaus erstreckt, wobei je ein Anzeigeelement vorgesehen ist, welches durch Aufschieben des Endes des je einen Rohres in dessen Endlage aus einer Grundstellung in eine Montagestellung bewegbar ist, und wobei ein farbiger Bestandteil des Anzeigeelements nur in einer der Stellungen von außen sichtbar ist, und wobei in der je einen Hülse mindestens ein Durchbruch ausgebildet ist, über welchen der farbige Bestandteil des radial innerhalb der Hülse liegenden Anzeigeelements in einer seiner Stellungen von außen sichtbar ist.

Fittings kommen unter anderem im Sanitärbereich als Verbindungsstücke von Rohren zur Anwendung. Neben Fittings, die über Löt-, Schraub- oder Pressverbindungen mit den Rohren verbunden werden, sind auch Steckfittings bekannt, bei welchen die Rohre in das jeweilige Fitting eingesteckt und dort im Zuge des Einsteckens fixiert werden. Dabei ist allerdings jeweils noch ein Dichtungselement vorzusehen, zumeist in Form eines O-Ringes, um die Verbindung zwischen Fitting und Rohr abzudichten und ein Austreten von Fluid zu unterbinden. Wird das jeweilige Rohr auf Länge zurechtgeschnitten, so muss üblicherweise vor einem Einführen des Rohrendes in das Fitting eine Kalibrierung des Rohrendes vorgenommen werden, um dieses wieder in eine runde Form zu bringen und Grate zu entfernen. Denn insbesondere Letztere können beim Einstecken des Rohrendes in das Fitting zu einer Beschädigung des Dichtungselements führen und damit Leckagen zur Folge haben. Es sind allerdings auch Fittings bekannt, bei welchen auch bei Einstecken nicht kalibrierter Rohrenden einer Beschädigung eines Dichtungselements zuverlässig vorgebeugt werden kann.

So ist aus der DE 10 2007 008 066 A1 ein Fitting bekannt, bei welchem zum Schutz eines in einer Nut eines Anschlussstücks liegenden Dichtungselements ein Schutzelement vorgesehen ist, welches im Zuge des Einschiebens eines Rohrendes zwischen zwei Positionen axial verschoben wird. In einer ersten Position verdeckt das Schutzelement dabei die Nut und steht mit dem Dichtungselement in Kontakt, so dass dieses in die Nut gedrückt wird und dabei nicht aus der Nut vorsteht. Wird nun das Rohrende eingeführt, so verschiebt das Rohr das Schutzelement aus der ersten Position heraus in eine zweite Position, in welcher das Schutzelement die Nut freigibt, wodurch sich das Dichtungselement an das Rohr anlegen kann. Außerdem ist noch ein ringförmiges Sicherungselement vorgesehen, welches das in das Fitting eingeführte Rohrende über vorstehende Zähne an einem axialen Auswandern hindert.

Des Weiteren gehen auch aus der DE 20 2011 103877 U1, der JP 5 286 129 B2, der WO 2019/048460 A1 und der JP 2003 314775 A Fittings hervor, bei welchen ein jeweiliges Dichtungselement durch ein Schutzelement im Zuge des Aufschiebens eines Rohres vor Beschädigungen geschützt wird.

Ausgehend vom vorstehend beschriebenen Stand der Technik ist es nun die Aufgabe der vorliegenden Erfindung, ein Fitting zu schaffen, bei welchem auch bei Einstecken eines nicht kalibrierten Rohrendes eine Beschädigung eines Dichtungselements zuverlässig ausgeschlossen werden kann, das sich gleichzeitig aber durch einen niedrigen Herstellungsaufwand auszeichnet. Zudem soll ein ordnungsgemäßes Aufschieben des Rohrs auf zuverlässige Weise nach außen hin sichtbar gemacht werden.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder.

Gemäß der Erfindung umfasst ein Fitting einen Grundkörper mit zumindest einem rohrförmigen Anschlussstück, welches jeweils einem Aufschieben eines Endes je eines Rohrs dient. Dabei ist das zumindest eine Anschlussstück mit jeweils einer umlaufenden Nut versehen, in welcher je ein Dichtungselement platziert ist. Radial umliegend zum zumindest eine Anschlussstück ist jeweils ein Schutzelement vorgesehen, welches durch Aufschieben des Endes des je einen Rohres axial aus einer ersten Position, in der das jeweils eine Schutzelement die jeweilige Nut zumindest teilweise abdeckt und dabei mit dem jeweiligen Dichtungselement in Kontakt steht, in eine zweite Position verschoben wird, in welcher das jeweils eine Schutzelement die Nut freigibt und der Kontakt zum Dichtungselement aufgehoben ist. Zudem ist dem zumindest einen Anschlussstück jeweils ein Sicherungselement zugeordnet, welches einem axialen Fixieren des je einen Rohres in dessen auf das zumindest eine Anschlussstück aufgeschobenen Endlage dient.

Das erfindungsgemäße Fitting verfügt also über einen Grundkörper, der mit zumindest einem Anschlussstück ausgestattet ist. Dabei ist dieses Anschlussstück rohrförmig gestaltet, um Fluid zwischen den an das Fitting angeschlossenen Rohren leiten zu können. Ein Aufschieben des Endes des jeweiligen Rohres findet dabei auf einen Außenumfang des rohrförmigen Anschlussstücks statt, an welchem auch die umlaufende Nut zur Aufnahme des je einen Dichtungselements ausgebildet ist. Endseitig kann das Anschlussstück zudem konisch gestaltet sein, um das Aufschieben des Endes des Rohres zu erleichtern und zudem gegebenenfalls einen ungewollten, ovalen Querschnitt des Rohrendes zu reduzieren, welcher beim Zuschneiden des Rohres entstanden sein kann.

Im Rahmen der Erfindung kann das zumindest eine Anschlussstück zudem mit einer weiteren, umlaufenden Nut ausgestattet sein, die axial in Aufschieberichtung des Rohres auf die erste Nut folgt, in welcher das mit dem Schutzelement in dessen erster Position in Kontakt stehende Dichtungselement vorgesehen ist.

Auch in der weiteren Nut ist bevorzugt ein Dichtungselement platziert, wobei dieses Dichtungselement im Zuge der Verschiebung des Schutzelement aus seiner ersten Position in die zweite Position zwischenzeitlich mit dem Schutzelement in Kontakt gelangt und dadurch im Zuge des Aufschiebens des Rohres in die weitere Nut gedrückt wird, um dieses weitere Dichtungselement ebenfalls vor einem Kontakt mit der ggf. unkalibrierten Stirnseite des Rohrendes zu schützen. Insbesondere entsprechen dabei die weitere Nut und auch das hierin vorgesehene, weitere Dichtungselement dabei der ersten Nut bzw. dem hierin vorgesehenen Dichtungselement.

Das jeweilige Schutzelement ist im Rahmen der Erfindung insbesondere als ringförmiges Bauteil ausgeführt und besteht bevorzugt aus einem Material mit niedrigem Reibungskoeffizienten, so dass eine Verschiebung des Schutzelements zwischen der ersten Position und der zweiten Position mit niedriger Reibung durchgeführt werden kann. Dabei dient das Schutzelement einem Schutz des in der Nut platzierten Dichtungselements, indem das Schutzelement in der ersten Position die Nut zumindest teilweise abdeckt und dabei mit dem Dichtungselement in Kontakt steht, dann aber bei Verschiebungen in die zweite Position die Nut freigibt und den Kontakt zum Dichtungselement unterbricht. Besonders bevorzugt ist das Schutzelement an einer axialen Stirnseite mit einer Kontaktfläche ausgestattet, welche einem Kontakt mit dem Ende des Rohres bei dessen Aufschieben auf das Anschlussstück dient. Dabei wird ein Verschieben des Schutzelements zwischen seinen Positionen dann unmittelbar über das Rohr im Zuge von dessen Aufschieben auf das Anschlussstück herbeigeführt, wobei das Schutzelement zum Schutz des Dichtungselements quasi die Funktion eines kalibrierten Rohrendes übernimmt.

Teil des erfindungsgemäßen Fittings ist zudem das jeweilige Sicherungselement, welches im Rahmen der Erfindung bevorzugt ring- oder rohrförmig gestaltet ist. Dabei dient das Sicherungselement der axialen Fixierung des aufgeschobenen Rohrs am Fitting, so dass das Ende des Rohres nicht ungewollt wieder von dem zugehörigen Anschlussstück abwandern und damit eine Trennung der Verbindung erfolgen kann. Zu diesem Zweck ist das Sicherungselement insbesondere mit mehreren über den Umfang verteilten, widerhakenähnlichen Ansätzen ausgestattet, die an das aufgeschobene Rohr andrücken und dieses in der Folge an einem axialen Abwandern hindern. Besonders bevorzugt ist das Sicherungselement dabei so im Fitting angeordnet, dass es radial umliegend zu dem aufgeschobenen Rohr liegt, dieses also radial innen axial fixiert.

Das Dichtungselement liegt erfindungsgemäß insbesondere als O-Ring vor, welcher stirnseitig an einem Außenumfang bevorzugt einen konischen Abschnitt aufweist, welcher im verbauten Zustand des Dichtungselements axial der Seite zugewandt ist, von welcher das Rohrende aufgeschoben wird. Hierdurch kann die Kraft reduziert werden, welche zum Aufschieben des Rohres notwendig ist. Weiter bevorzugt weist der O-Ring an einem Innenumfang eine durch eine Vergrößerung des Innendurchmessers gebildete Mulde auf, um die Stauchung des O-Ringes zu reduzieren, so dass sich eine zuverlässige Abdichtung zwischen dem Fitting und dem Rohr ausbildet. Alternativ dazu kann das Dichtungselement aber auch als herkömmlicher O-Ring mit kreisrundem Querschnitt vorliegen.

Die Erfindung umfasst nun die technische Lehre, dass das Schutzelement radial innenliegend zu dem Sicherungselement angeordnet und dabei in dem Sicherungselement zwischen den Positionen axial verschiebbar geführt ist. Mit anderen Worten ist also das Schutzelement im Fitting radial innenliegend zum Sicherungselement platziert, wobei die axiale Verschiebung des Schutzelements zwischen der ersten Position und der zweiten Position unter Führung im radial umliegenden Sicherungselement stattfindet. Im Sinne der Erfindung ist das jeweilige Schutzelement dabei vollständig radial innenliegend zu dem jeweiligen Sicherungselement platziert.

Eine derartige Ausgestaltung eines Fittings hat dabei den Vorteil, dass somit einerseits eine zuverlässige Führung des Schutzelements bei seiner Verschiebung zwischen den beiden axialen Positionen über das umliegende Sicherungselement sichergestellt ist. Andererseits wird über das Schutzelement eine Zentrierung des Sicherungselements auf dem Anschlussstück des Grundkörpers erreicht. Insgesamt lässt sich damit ein Fitting realisieren, bei welchem selbst bei Aufschieben eines nicht kalibrierten Rohres eine Beschädigung des Dichtungselements zuverlässig ausgeschlossen werden kann, gleichzeitig aber eine Funktion des Fittings durch Zentrierung des Sicherungselements sichergestellt ist. Dies lässt sich dabei mit niedrigem Herstellungsaufwand verwirklichen.

Zudem ist an dem Grundkörper je eine Hülse befestigt, die radial umliegend zu dem zumindest einen Anschlussstück, dem Schutzelement und dem Sicherungselement vorgesehen ist und sich axial über das zumindest eine Anschlussstück hinaus erstreckt. Die Anordnung einer axial längeren und radial umliegenden Hülse hat den Vorteil, dass hierdurch das Aufschieben des Rohrs auf das Anschlussstück vereinfacht wird, da das Rohr zunächst in die Hülse einzuführen ist und dabei zentriert wird. Besonders bevorzugt ist eine endseitige Öffnung der Hülse, an welcher das Rohr in das Fitting einzuführen ist, konisch ausgeführt, indem sich ein Innendurchmesser und/oder ein Außendurchmesser der Hülse in diesem Bereich reduzieren.

Des Weiteren ist bei dem erfindungsgemäßen Fitting ein Anzeigeelement vorgesehen, welches durch Aufschieben des Endes des je einen Rohres in dessen Endlage aus einer Grundstellung in eine Montagestellung bewegt wird, wobei ein farbiger Bestandteil des Anzeigeelements nur in einer der Stellungen von außen sichtbar ist. Dies hat den Vorteil, dass somit über das Anzeigeelement nach außen hin sichtbar gemacht werden kann, ob das Rohr ordnungsgemäß in seine Endlage aufgeschoben worden ist. Im Rahmen der Erfindung kann das Anzeigeelement dabei komplett farbig gestaltet sein oder nur einen farbigen Anteil aufweisen, wobei es für die Erfindung maßgeblich ist, dass die Farbe des Anzeigenelements nur in einer der beiden Stellungen, also entweder der Grundstellung oder der Montagestellung des Anzeigeelements, von außen sichtbar ist. Als Farben kommen hier insbesondere auffällige Farben, wie Rot oder Grün oder Ähnliches in Frage.

Erfindungsgemäß ist in der Hülse mindestens ein Durchbruch ausgebildet, über welchen der farbige Bestandteil des radial innerhalb der Hülse liegenden Anzeigeelements in einer seiner Stellungen von außen sichtbar ist. Hierdurch kann auf einfache Art und Weise ein Sichtbarmachen der Endlage des aufgeschobenen Rohres realisiert werden. Ferner ist erfindungsgemäß das Anzeigeelement mit mehreren, radial nach außen vorstehenden Führungselementen versehen, mit welchen das Anzeigeelement in Führungsnuten axial bewegbar geführt ist, die an einer Innenwand der Hülse ausgebildet sind. Dies hat den Vorteil, dass hierdurch eine geeignete Führung des Anzeigeelements bei seiner Verschiebung zwischen der Grundstellung und der Montagestellung verwirklicht werden kann.

Bei der DE 10 2007 008 066 A1 ist das Sicherungselement im Fitting über eine entsprechend ausgebildete Nut zentriert, was allerdings entsprechend den Herstellungsaufwand erhöht, da die zusätzliche Nut zu fertigen ist.

Im Sinne der Erfindung ist mit "axial" eine Orientierung in Richtung einer Längsmittelachse gemeint, auf welcher das rohrförmige Anschlussstück des Grundkörpers koaxial liegend angeordnet ist. "Radial" meint eine Orientierung ausgehend von der Längsmittelachse in Durchmesserrichtung.

Entsprechend einer Ausführungsform der Erfindung ist das Schutzelement an einem Innendurchmesser mit einem konischen Abschnitt versehen, an welchem das Schutzelement in der ersten Position mit dem Dichtungselement in Kontakt steht, wobei sich der konische Abschnitt zu einem zylindrischen Abschnitt verjüngt, an welchem das Schutzelement mit dem Dichtungselement im Zuge der Verschiebung des Schutzelements aus der ersten Position in die zweite Position in Kontakt gelangt. Dies hat den Vorteil, dass der konische Abschnitt hierbei so dimensioniert werden kann, dass das Schutzelement zwar in der ersten Position mit dem Dichtungselement in Kontakt steht, dieses dabei aber nicht komprimiert wird, was sich positiv auf die Lebensdauer des Dichtungselements auswirkt. Wird nun allerdings das Schutzelement in die zweite Position verschoben, so bewirkt die Verjüngung, d.h. Reduzierung des Innendurchmessers des Schutzelements, auf den zylindrischen Abschnitt, dass das Dichtungselement über das Schutzelement in die Nut gedrückt wird und in der Folge insbesondere nicht mehr aus der Nut vorsteht.

Besonders bevorzugt entspricht der Innendurchmesser des zylindrischen Abschnitts dabei dem Innendurchmesser des aufzuschiebenden Rohres, so dass das Dichtungselement letztendlich über den zylindrischen Abschnitt des Schutzelements auf ein Maß zusammengedrückt wird, in welchem sich das Dichtungselement auch beim später vollständig aufgeschobenen Rohr befinden muss. Alternativ dazu kann der Innendurchmesser des zylindrischen Abschnitts aber auch kleiner sein, als ein Soll-Innendurchmesser des aufzuschiebenden Rohres, wodurch auf jeden Fall sichergestellt wird, dass das Rohr beim Aufschieben nicht axial in Kontakt mit dem Dichtungselement gelangen und dieses beschädigen kann. Dabei ist der Innendurchmesser des zylindrischen Abschnitts bevorzugt geringfügig kleiner als der Soll-Innendurchmesser des aufzuschiebenden Rohrs.

Es ist eine alternative Ausgestaltung des Schutzelements, dass dieses an einem Innenumfang zumindest abschnittsweise an einem axialen Ende, an welchem eine stirnseitige Kontaktfläche für einen Kontakt mit dem aufzuschiebenden Rohr ausgebildet ist, als Innenkonus ausgeführt ist, an welchem das Schutzelement in der ersten Position mit dem Dichtungselement in Kontakt steht. Der Innenkonus weist dabei an dem axialen Ende einen Innendurchmesser auf, welcher einem Soll-Innendurchmesser des aufzuschiebenden Rohrs entspricht oder kleiner ist als der Soll-Innendurchmesser. Auch hierdurch kann das Schutzelement so gestaltet werden, dass das Schutzelement in der ersten Position mit dem Dichtungselement an dem Innenkonus in Kontakt steht, das Dichtungselement dabei aber nicht komprimiert, was einen positiven Effekt auf die Lebensdauer des Dichtungselements hat. Aufgrund der zumindest abschnittsweisen, konischen Gestaltung des Schaltelements an seinem Innenumfang wird das Dichtungselement über das Schutzelement dann aber im Zuge der Verschiebung des Schutzelements in die Nut gedrückt, so dass es nicht mit dem Ende des ggf. unkalibrierten Rohrs im Zuge des Aufschiebens des Rotors in Kontakt gelangen kann.

Der Innenkonus des Schutzelementes ist dabei derartig gestaltet, dass das Schutzelement an dem axialen Ende, an welchem ein stirnseitiger Kontakt mit dem auszuschiebenden Rohr im Zuge des Aufschiebens stattfindet, einen Innendurchmesser aufweist, welcher zumindest dem Soll-Innendurchmesser des auszuschiebenden Rohrs entspricht oder sogar kleiner ist. Die Wahl eines im Vergleich zu Soll-Innendurchmesser des Rohrs kleineren Innendurchmessers des Schutzelements hat dabei den Vorteil, dass hierdurch auf jeden Fall ein Kontakt des in die Nut gedrückten Dichtungselements mit einer Stirnseite des Endes des auszuschiebenden Rohrs ausgeschlossen werden kann.

Im Rahmen der vorgenannten Ausführungsform kann der Innenkonus dabei einen axialen Teilabschnitt des jeweiligen Schaltelements bilden, wobei neben diesem Abschnitt dann noch ein oder mehrere weitere, axiale Abschnitte vorgesehen sind, die dem Innenkonus in Schieberichtung des Schutzelementes von der ersten Position in die zweite Position vorgelagert liegen. Der mindestens eine weitere Abschnitt kann dabei zylindrisch gestaltet sein oder auch eine anderweitige Kontur aufweisen. Besonders bevorzugt erstreckt sich aber der Innenkonus des jeweiligen Schutzelements über die komplette axiale Baulänge des Schutzelementes.

In Weiterbildung der Erfindung weist das jeweils eine Schutzelement an einem Außenumfang zumindest abschnittsweise einen Außendurchmesser auf, mit welchem das jeweils eine Schutzelement mit einer Übermaßpassung in dem jeweiligen, radial umliegenden Sicherungselement axial verschiebbar geführt ist. Mit anderen Worten ist das jeweilige Schutzelement also an einem Außenumfang zumindest an einem axialen Abschnitt mit einem Außendurchmesser versehen, welcher größer gewählt ist, als ein Innendurchmesser, an welchem das Schutzelement seitens des Sicherungselements geführt ist. In vorteilhafter Weise wird hierdurch erreicht, dass aufgrund der Übermaßpassung eine radiale Flächenpressung von dem radial umliegenden Sicherungselement auf das Schutzelement hervorgerufen wird, was einer Verschiebung des Schutzelement zwischen den beiden Positionen einen Widerstand entgegensetzt. Hierdurch wird verhindert, dass das Schutzelement dem Rohr beim Aufschieben ohne Kontakt vorauseilt und dabei den Kontakt zu dem in der Nut befindlichen Dichtungselement zu früh aufhebt. Hierdurch könnte ein ungewollter Kontakt des Dichtungselements mit der Stirnseite des Endes des Rohres stattfinden. Stattdessen wird über die Flächenpressung erreicht, dass das Schutzelement stets axial in Kontakt mit dem Rohr beim Aufschieben verbleibt.

Der Außendurchmesser des jeweiligen Schutzelements ist dabei allerdings nur geringfügig größer als der Innendurchmesser des Sicherungselements im Bereich der axialen Führung zu wählen, damit eine axiale Verschiebung des Schutzelement im Sicherungselement nach wie vor möglich ist.

Gemäß einer Ausgestaltungsmöglichkeit der Erfindung weist das Sicherungselement einen ringförmigen Körper auf, an welchem in Umfangsrichtung aufeinanderfolgende und durch Schlitze jeweils voneinander getrennte Laschen axial anschließen. Dabei weist jede einzelne Lasche an ihrem jeweiligen dem Körper abgewandt liegenden Ende eine hakenartige Form auf, deren Spitze nach radial innen und in Aufschieberichtung des je einen Rohrs ausgerichtet ist. In diesem Fall ist das Sicherungselement also hohlzylinderförmig ausgebildet und weist mehrere Laschen auf, die aufgrund der Trennung über Schlitze radialbeweglich an dem ringförmigen Körper des Sicherungselements angebunden sind. Die hakenartige, insbesondere widerhakenartige Form der Enden der Laschen bewirkt bei Aufschieben des Rohrs auf das Anschlussstück eine zuverlässige axiale Fixierung des Rohrs auf dem Anschlussstück.

In Weiterbildung der vorgenannten Ausgestaltungsmöglichkeit ist der ringförmige Körper des je einen Sicherungselements auf einem Außenumfang mit mehreren Abschnitten versehen, die in Umfangsrichtung aufeinanderfolgend angeordnet sind und jeweils radial nach außen gegenüber einem Außendurchmesser des Körpers vorstehen. Über diese radial nach außen vorstehenden Abschnitte kann zum einen aufgrund der damit größeren Materialstärke im Bereich der Abschnitte eine höhere Belastbarkeit des Sicherungselements verwirklicht werden. Zum anderen kann hierdurch auch ein sicherer Sitz des Sicherungselements an einem umliegenden Bauteil ausgebildet werden, wenn das Rohr in das erfindungsgemäße Fitting eingeschoben ist und dabei die radial vorstehenden Abschnitte radial an das umliegende Bauteil andrücken. Besonders bevorzugt handelt es sich dabei bei dem umliegenden Bauteil um eine Hülse, die radial umliegend zu dem Sicherungselement an dem Grundkörper befestigt ist. Die Abschnitte sind bevorzugt äquidistant zueinander über den Außenumfang des Körpers verteilt.

In Weiterbildung der Erfindung weist jede einzelne Lasche des Sicherungselements an einer radialen Außenseite je eine Abrundung auf, mit welcher die einzelne Lasche bei Aufschieben des Endes des Rohres auf das zumindest eine Anschlussstück flächig mit einer Innenwand der je einen Hülse in Kontakt tritt. In vorteilhafter Weise wird hierdurch der Kontakt-bereich zwischen den Laschen und der umliegenden Hülse vergrößert, so dass die Hülse für ein radiales Andrücken der Laschen an das aufgeschobene Rohr und damit mittelbar für dessen axiale Fixierung sorgt.

Es ist zudem eine hierzu alternative oder auch ergänzende Weiterbildung, dass sich die Hülse auch axial über das jeweilige Sicherungselement hinaus erstreckt und dabei an einer Innenwand mit einem radial nach innen weisenden, umlaufenden Abschnitt versehen ist, welcher einen dem jeweiligen Sicherungselement zugewandten, axialen Anschlag definiert. Dieser axiale Anschlag liegt dabei insbesondere als im Wesentlichen axiale Anlagefläche vor. Dies hat den Vorteil, dass auch bei einer hohen axialen Kraft ein gemeinsames Auswandern des Rohres mit dem Sicherungselement aus dem Fitting unterbunden werden kann, indem sich das Sicherungselement axial an dem Anschlag der Hülse abstützt.

Entsprechend einer weiteren Ausführungsform der Erfindung ist das Schutzelement mit einer axial orientierten Anlagefläche versehen, an welcher das Schutzelement im Zuge der Verschiebung aus der ersten Position in die zweite Position mit dem Anzeigeelement in Kontakt gelangt und dieses dabei aus der Grundstellung in die Montagestellung bewegt. In diesem Fall sorgt also das Schutzelement für die Verschiebung des Anzeigeelements zwischen seiner Grundstellung und seiner Montagestellung, indem das Schutzelement bei seiner Verschiebung aus der ersten Position in die zweite Position beim Aufschieben des Rohrendes das Anzeigeelement mitnimmt. Die axial orientierte Anlagefläche ist dabei insbesondere als Anlageschulter ausgebildet.

Alternativ oder ergänzend zu der vorgenannten Ausführungsform ist das Anzeigeelement insbesondere zudem am Sicherungselement in axial verlaufenden Ausnehmungen geführt, in welchen bevorzugt die radial nach außen vorstehenden Führungselementen des Anzeigeelements laufen. Dabei sind insbesondere in jeder der Ausnehmungen bevorzugt in Umfangsrichtung vorstehende Einwölbungen ausgebildet, die das Anzeigeelement in der Grundstellung halten und ein Verlassen der Grundstellung erst bei Verschiebung des Anzeigeelements bei Aufschieben des Rohres zulassen. Hierdurch wird verhindert, dass das Anzeigeelement ungewollt und ohne Aufschieben des Rohres, beispielsweise aufgrund der Einbaulage des Fittings, aus der Grundstellung in die Montagestellung wandert.

Es ist eine weitere Ausführungsform der Erfindung, dass das zumindest eine Anschlussstück des Grundkörpers axial zwischen einem axialen Ende, von welchem das Aufschieben des Endes des Rohrs auf das Anschlussstück her stattfindet, und der jeweils einen Nut an einem Außenumfang zumindest abschnittsweise einen ersten Außendurchmesser aufweist, welcher einem Soll-Innendurchmesser des aufzuschiebenden Rohrs entspricht. In vorteilhafter Weise kann hierdurch eine Kalibrierung eines unkalibrierten Rohrendes erreicht werden, indem der erste Außendurchmesser des Anschlussstückes dazu verwendet wird, das Rohrende im Zuge des Aufschiebens auf den gewünschten Innendurchmesser zu kalibrieren.

In Weiterbildung der vorgenannten Ausführungsform ist das zumindest eine Anschlussstück auf einer dem axialen Ende zugewandten Seite und axial benachbart zu der jeweils einen Nut mit dem ersten Außendurchmesser versehen, wobei sich der erste Außendurchmesser in Richtung des axialen Endes zunächst auf einen zweiten Außendurchmesser reduziert und anschließend zu dem axialen Ende hin auf einen dritten Außendurchmesser aufweitet, welcher zwischen dem ersten Außendurchmesser und dem zweiten Außendurchmesser liegt. Das zumindest eine Anschlussstück ist also axial benachbart zu der umlaufenden Nut mit dem ersten Außendurchmesser versehen, wobei dieser erste Außendurchmesser in Richtung des axialen Endes in einen zweiten Außendurchmesser übergeht, welcher kleiner ist als der erste Außendurchmesser. Weiter in Richtung des axialen Endes vergrößert sich der zweite Außendurchmesser dann auf einen dritten Außendurchmesser, welcher größer als der zweite Außendurchmesser und kleiner als der erste Außendurchmesser ist.

Eine derartige Ausführungsform eines Fittings hat dabei den Vorteil, dass bei einem Überschieben des Rohrendes über den dritten Außendurchmesser des Anschlussstückes eine Vorkalibrierung des Rohrendes darstellbar ist, indem dieses von einem nach einem Schneidevorgang ggf. ovalen Querschnitt in einen kreisrunden Querschnitt überführt wird. Dadurch, dass der hierauf folgende, zweite Außendurchmesser dann kleiner gewählt ist, kann das Rohr im Weiteren mit niedrigerem Kraftaufwand weiter aufgeschoben werden, bevor dann an dem ersten Außendurchmesser eine Kalibrierung des Rohrendes auf den Soll-Außendurchmesser mit kreisrundem Querschnitt erfolgt. Bevorzugt ist ein jeweiliger Übergang zwischen den Außendurchmessern dabei jeweils stetig gestaltet.

In Weiterbildung der Erfindung sind mehrere rohrförmige Anschlussstücke am Grundkörper vorgesehen, die jeweils dem Aufschieben eines Endes je eines Rohrs dienen. Dabei kann das Fitting zwei, drei oder auch mehrere derartige Anschlussstücke aufweisen, je nachdem wie viele Rohre über das Fitting miteinander zu verbinden sind.

Die Bezugnahme der Ansprüche auf die Zeichnungen durch Verwendung von Bezugszeichen soll den Schutzumfang der Ansprüche nicht beschränken.

Eine vorteilhafte Ausführungsform der Erfindung, die nachfolgend erläutert wird, ist in den Zeichnungen dargestellt. Es zeigt:
- Fig. 1: eine perspektivische und teilweise geschnittene Ansicht eines Fittings entsprechend einer ersten Ausführungsform der Erfindung;
- Fig. 2: eine Schnittansicht eines Teils des Fittings aus Fig. 1, gezeigt vor einer Montage eines Rohrs;
- Fig. 3: eine weitere Schnittansicht des Teils des Fittings aus Fig. 1, gezeigt nach einer Montage eines Rohrs;
- Fig. 4: eine perspektivische Ansicht einer Hülse des Fittings aus Fig. 1;
- Fig. 5: eine perspektivische Darstellung eines Sicherungselements des Fittings aus Fig. 1;
- Fig. 6: eine Schnittansicht eines Schutzelements des Fittings aus Fig. 1;
- Fig. 7: eine perspektivische Ansicht eines Anzeigeelements des Fittings aus Fig. 1;
- Fig. 8: eine perspektivische Darstellung eines Dichtungselements, wie es alternativ bei dem Fitting aus Fig. 1 zur Anwendung kommen kann;
- Fig. 9: eine Schnittansicht eines Teils eines Fittings entsprechend einer zweiten Ausgestaltungsmöglichkeit der Erfindung, gezeigt vor einer Montage eines Rohrs;
- Fig. 10: eine Schnittansicht eines Schutzelements des Fittings aus Fig. 9;
- Fig. 11: eine Schnittansicht einer Hülse des Fittings aus Fig. 9; und
- Fig. 12: eine perspektivische Ansicht eines Sicherungselements des Fittings aus Fig. 9.

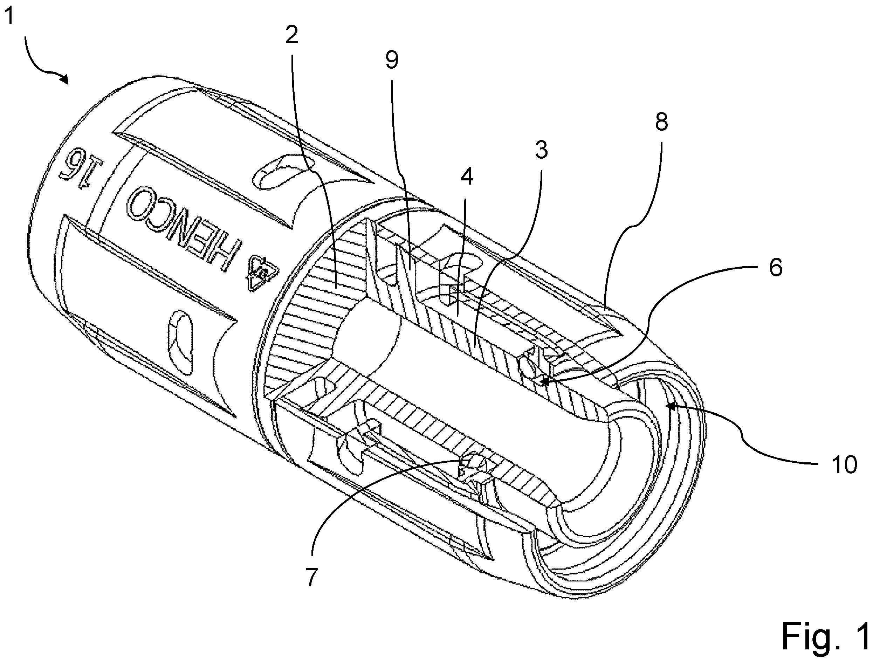

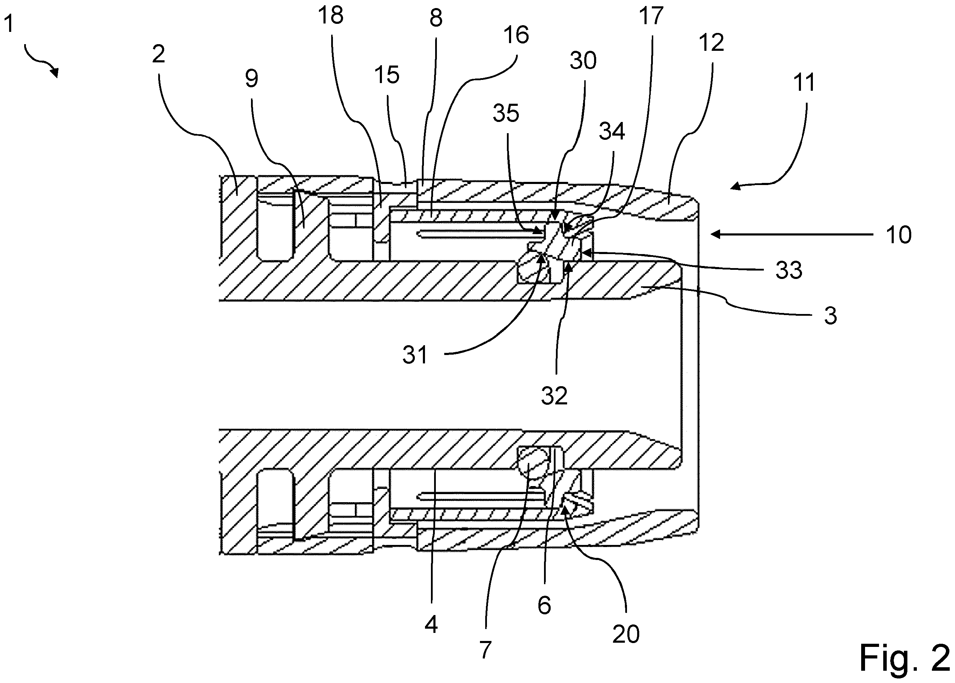

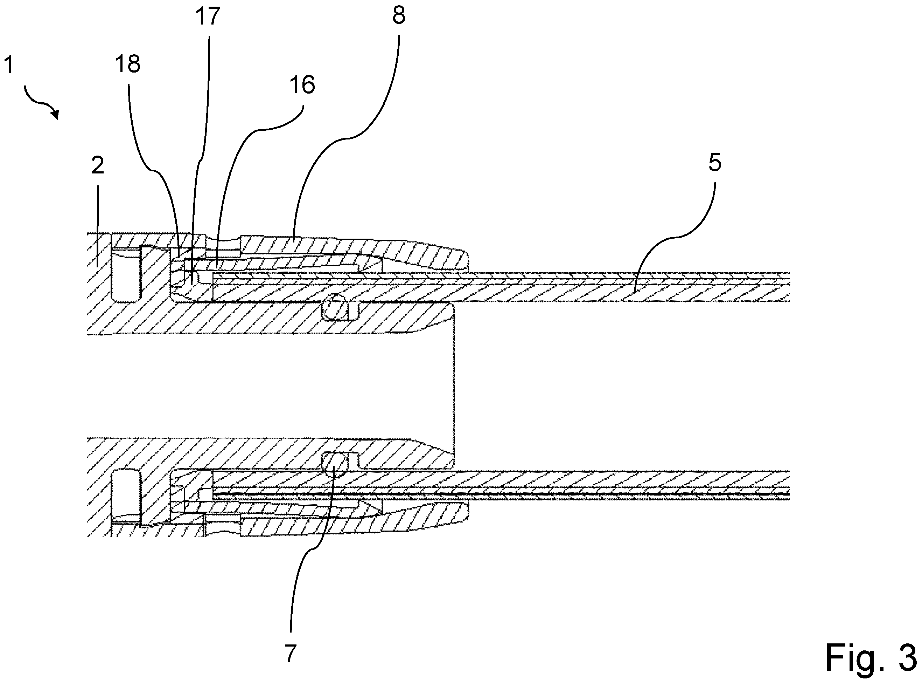

Fig. 1 zeigt eine perspektivische Ansicht eines Fittings 1, welches entsprechend einer ersten Ausführungsform der Erfindung ausgebildet und insbesondere für den Sanitärbereich vorgesehen ist. Dabei umfasst das Fitting 1 einen Grundkörper 2, welcher zwei koaxial zueinander liegende Anschlussstücke 3 aufweist, von denen in Fig. 1 allerdings nur ein Anschlussstück 3 in der teilweise geschnittenen Ansicht zu sehen ist. Das einzelne Anschlussstück 3 ist hierbei rohrförmig gestaltet, wobei ein - insbesondere in der weiteren Schnittansicht in Fig. 2 zu erkennender - Außenumfang 4 des jeweiligen Anschlussstücks 3 für das Aufschieben eines Endes eines am Fitting 1 zu befestigenden Rohres 5 vorgesehen ist, wie es in der weiteren Schnittansicht in Fig. 3 gezeigt ist. Am Außenumfang 4 ist das jeweilige Anschlussstück 3 zudem mit einer umlaufenden Nut 6 versehen, in welcher ein Dichtungselement 7 in Form eines O-Ringes platziert ist.

Pro Anschlussstück 3 ist zudem eine Hülse 8 vorgesehen, die auf den Grundkörper 2 auf einen radial vorstehenden Bund 9 aufgeschoben und hier über eine Pressverbindung an dem Grundkörper 2 befestigt ist. Dabei ist die Hülse 8 radial umliegend zu dem jeweiligen Anschlussstück 3 vorgesehen und überragt diese in axialer Richtung, wie insbesondere in Fig. 2 zu erkennen ist. Gemeinsam mit dem jeweiligen Anschlussstück 3 definiert die Hülse 8 eine Einführöffnung 10 für das Rohr 5, wobei die Hülse 8 an einem der Einführöffnung 10 zugewandten axialen Ende 11 einen konischen Abschnitt 12 aufweist.

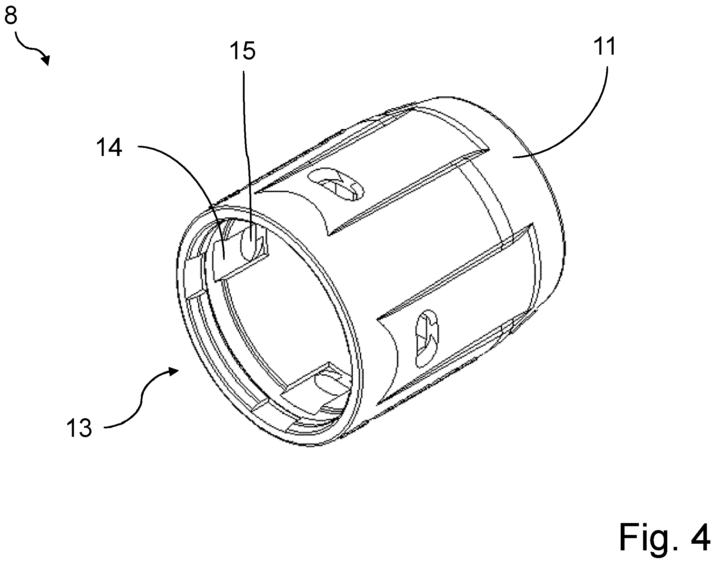

In Fig. 4 ist die Hülse 8 zudem in einer perspektivischen Einzelansicht dargestellt. Wie hier zu erkennen ist, weist die Hülse 8 an einem zum Ende 11 entgegengesetzt liegenden, axialen Ende 13 an ihrem Innenumfang mehrere in Umfangsrichtung verteilte Führungsnuten 14 auf, die jeweils in axialer Richtung verlaufen. Am Ende jeder Führungsnut 14 ist ferner je ein Durchbruch 15 ausgestaltet.

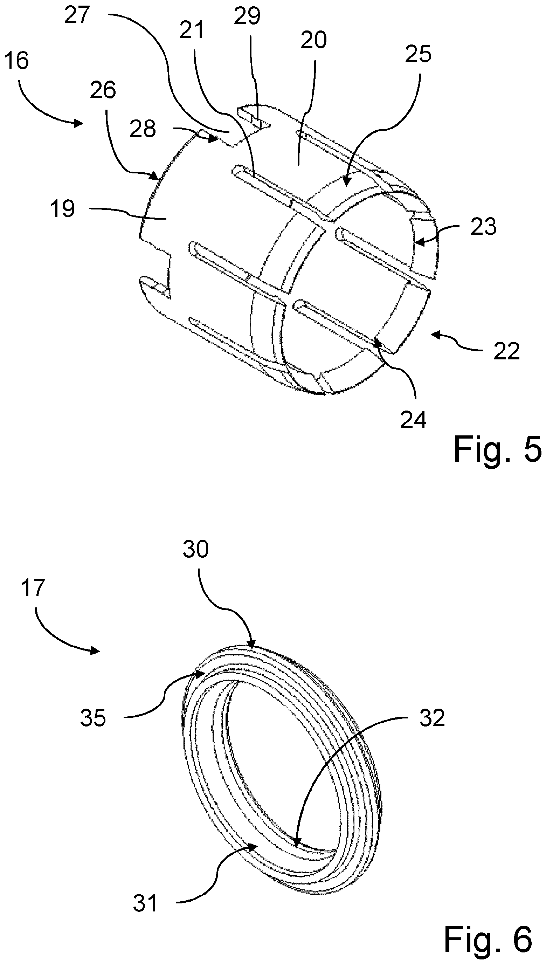

Wie in den Fig. 2 und 3 zu erkennen ist, umfasst das Fitting 1 außerdem noch pro Anschlussstück 3 je ein Sicherungselement 16, je ein Schutzelement 17 und je ein Anzeigeelement 18, welche radial zwischen dem jeweiligen Anschlussstück 3 und der umliegenden Hülse 8 platziert sind. Das Sicherungselement 16 ist dabei in Fig. 5 in einer perspektivischen Einzelansicht dargestellt und weist einen ringförmigen Körper 19 auf, an welchen sich mehrere axial erstreckende Laschen 20 anschließen, die in Umfangsrichtung durch Schlitze 21 voneinander getrennt sind. An dem Körper 19 abgewandt liegenden, radial beweglichen Enden 22 sind die Laschen 20 jeweils mit je einer hakenartigen Form 23 versehen, deren Spitze 24 nach radial innen und von dem jeweiligen Ende 22 wegweisend ausgerichtet ist. Außerdem sind die Laschen 20 jeweils radial außen und auf Höhe ihrer jeweiligen hakenartigen Form 23 mit jeweils einer Abrundung 25 ausgestattet. An einer den Laschen 20 abgewandt liegenden Stirnseite definiert der ringförmige Körper 19 ferner eine Anlagefläche 26 und ist mit mehreren, in Umfangsrichtung äquidistant zueinander angeordneten Aussparungen 27 versehen, die axial verlaufen. Dabei stehen in die einzelne Aussparung 27 jeweils zwei Einwölbungen 28 und 29 in Umfangsrichtung vor.

Aus Fig. 6 geht eine perspektivische Einzelansicht des Schutzelements 17 hervor, welches ebenfalls ringförmig gestaltet ist und bevorzugt aus einem Material mit einem niedrigen Reibungskoeffizienten besteht. Das Schutzelement 17 verfügt an einem Außenumfang über eine umlaufende Führungsfläche 30 und ist ferner an einem Innenumfang mit einem konischen Abschnitt 31 versehen, welcher sich auf einen niedrigeren Innendurchmesser in Form eines zylindrischen Abschnitts 32 verjüngt. Dies ist dabei insbesondere in den Schnittansichten in Fig. 2 und 3 zu erkennen. An einer axialen Stirnseite bildet das Schutzelement 17 des Weiteren eine Kontaktfläche 33, die in eine Anlageschulter 34 übergeht. Auch die Kontaktfläche 33 und die Anlageschulter 34 sind dabei insbesondere in den Schnittansichten in Fig. 2 und 3 zu erkennen. An einer hierzu entgegengesetzten axialen Stirnseite ist außerdem ebenfalls eine Anlageschulter 35 definiert.

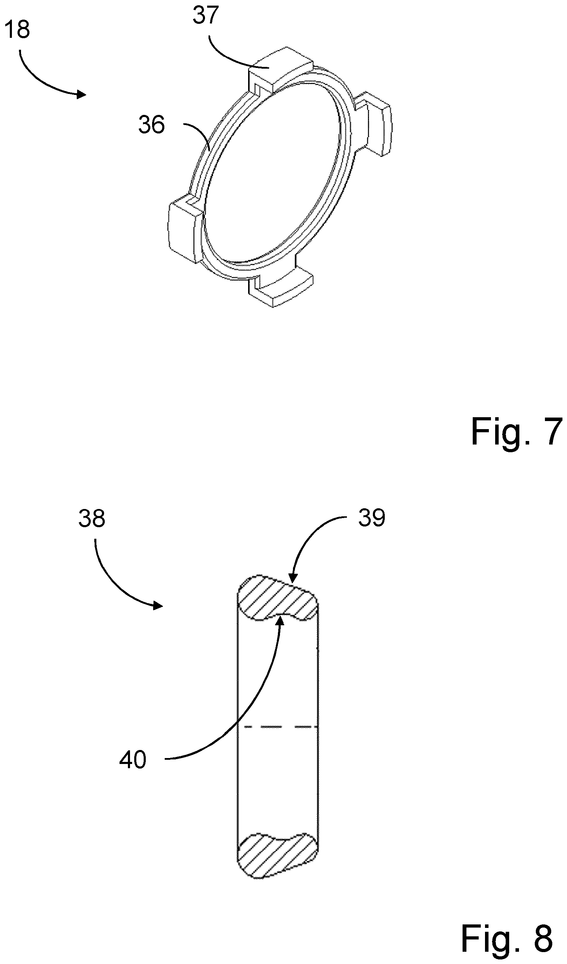

Das Anzeigeelement 18 verfügt, wie insbesondere aus der in Fig. 7 gezeigten, perspektivischen Einzelansicht hervorgeht, über einen ringförmigen Grundkörper 36 und ist an einem Außenumfang dieses Grundkörper 36 mit mehreren radial nach außen vorstehenden Führungselementen 37 ausgestattet, die in Umfangsrichtung äquidistant zueinander verteilt sind. Dabei ist entweder das komplette Anzeigeelement 18 oder aber nur die Führungselemente 37 mit einer auffälligen Farbe, insbesondere rot, hergestellt.

Wie insbesondere in Fig. 2 zu erkennen ist, liegt das Sicherungselement 16 mit seiner Anlagefläche 26 an dem umlaufenden Bund 9 des Grundkörpers 2 an, wobei radial innenliegend zum Sicherungselement 16 das Schutzelement 17 angeordnet ist, welches dabei an seiner Führungsfläche mit dem Sicherungselement 18 in Kontakt steht. Vor einem Aufschieben des Rohrs 5 befindet sich das Schutzelement 17 dabei in einer ersten axialen Position, die in Fig. 2 gezeigt ist und in der das Schutzelement 17 die Nut 6 teilweise verdeckt. Dabei steht das Schutzelement 17 in der ersten axialen Position an dem konischen Abschnitt 31 mit dem Dichtungselement 7 in Kontakt, wobei das Dichtungselement 7 hierbei nicht zusammengedrückt wird. Über die Anlageschulter 34 wird das Schutzelement 17 im Zusammenspiel mit den Spitzen 24 der Laschen 20 des Sicherungselements 16 an einem axialen Auswandern gehindert.

Ebenfalls radial innenliegend zu dem Sicherungselement 18 ist der ringförmige Grundkörper 36 des Anzeigeelement 18 platziert, wobei das Anzeigeelement 18 dabei mit den Führungselementen 37 in den Führungsnuten 14 der Hülse 8 geführt ist. Die Führungselemente 37 ragen dabei durch die Aussparungen 27 im Sicherungselement 16, welches das Anzeigeelement 18 über die jeweiligen Einwölbungen 28 und 29 in einer Grundstellung hält, in welcher radiale Außenseiten der Führungselemente 37 mit den Durchbrüchen 15 in der Hülse überdecken, so dass das Anzeigeelement 18 von außen sichtbar ist.

Wird nun das Rohr 5 mit seinem Ende in die Einführöffnung 10 eingeführt, so tritt das Schutzelement 17 an seiner Kontaktfläche 33 mit der Stirnseite des Rohrs 5 in Kontakt und wird in der Folge im Zuge des Aufschiebens des Rohrendes axial aus der ersten Position heraus bewegt. Dies führt dazu, dass der konische Abschnitt 31 zunächst das Dichtungselement 7 in die Nut 6 drückt, bis schließlich der zylindrische Abschnitt 32 mit dem Dichtungselement 7 in Kontakt tritt. Der Innendurchmesser des Schutzelements 17 im Bereich des zylindrischen Abschnitts 32 ist hierbei so gewählt, dass er einem Innendurchmesser des aufzuschiebenden Rohrs 5 entspricht. Insofern hat der Kontakt mit dem zylindrischen Abschnitt 32 zur Folge, dass das Dichtungselement 7 in der Nut 6 bereits soweit zusammengedrückt ist, dass das Rohr 5 im Zuge des weiteren Aufschiebens an dem Dichtungselement 7 vorbeiwandern werden kann, ohne dass es zu einem stirnseitigen Kontakt des Rohrendes mit dem Dichtungselement 7 kommt. Dadurch kann auch bei einem nicht kalibrierten Rohrende eine Beschädigung des Dichtungselements 7 verhindert werden.

Mit Aufschieben des Rohrs 5 werden außerdem die Laschen 20 des Sicherungselements 16 nach radial außen gedrückt und kommen mit ihren Abrundungen 25 mit einer Innenseite der Hülse 8 in Kontakt. Das Schutzelement 17 wird im Weiteren gemeinsam mit dem Rohr 5 verschoben und nimmt dabei im Zuge seiner Verschiebung in die in Fig. 3 gezeigte, zweite axiale Position an seiner Anlageschulter 35 das Anzeigeelement 18 mit, welches unter Führung in den Führungsnuten 14 der Hülse 8 aus seiner Grundstellung heraus in eine Montagestellung bewegt wird. Diese ist in Fig. 3 gezeigt. In dieser Montagestellung überdecken die radialen Außenseiten der Führungselemente 37 des Anzeigeelements 18 dann nicht mehr mit den Durchbrüchen 15 in der Hülse 8, so dass das Anzeigeelement 18 nicht mehr von außen sichtbar ist. Hierdurch wird dem Anwender ein ordnungsgemäßes Aufschieben des Rohres 5 angezeigt.

Ein ungewolltes, axiales Abwandern des Rohres 5 von dem jeweiligen Anschlussstück 3 wird über das Sicherungselement 18 mithilfe der Spitzen 24 der Laschen 20 formschlüssig unterbunden, indem diese an den Abrundungen 25 mit der Innenwand der Hülse 8 in Kontakt stehen und durch Zusammenspiel mit dem konischen Abschnitt 12 der Hülse 8 bei einem axialen Ziehen des Rohres 5 aufgrund der Keilwirkung an das Rohr 5 angepresst werden.

Zudem zeigt Fig. 8 eine perspektivische Ansicht eines Dichtungselements 38, wie es ebenfalls bei dem Fitting 1 aus den Fig. 1 bis 7 zur Anwendung kommen kann. Dabei weist das Dichtungselement 38 einen konischen Abschnitt 39 auf, über welchen die für das Aufschieben des Rohrs notwendige Kraft reduziert werden kann. Außerdem ist das Dichtungselement 38 an einem Innenumfang mit einer Mulde 40 versehen, über welche das Zusammendrücken des Dichtungselements 38 reduziert und damit ein optimaler Sitz des Dichtungselements 38 sichergestellt werden kann.

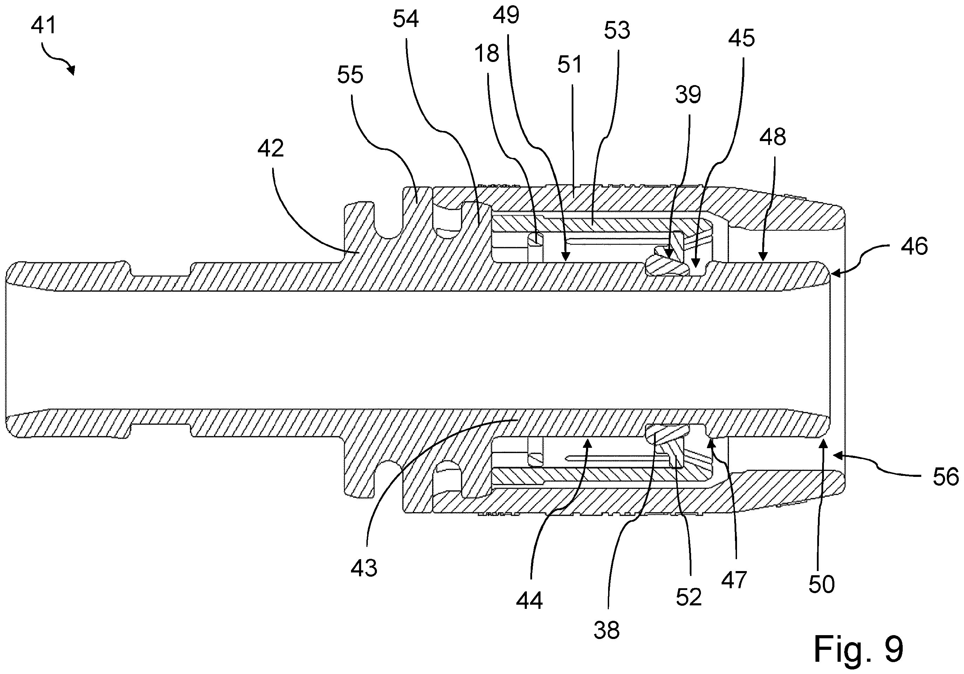

Aus Fig. 9 geht eine Schnittansicht eines Fittings 41 hervor, welches entsprechend einer zweiten Ausgestaltungsmöglichkeit der Erfindung ausgebildet und ebenfalls bevorzugt für eine Anwendung im Sanitärbereich vorgesehen ist. Vorliegend weist auch das Fitting 41 einen Grundkörper 42 auf, welcher über zwei koaxial zueinander liegende Anschlussstücke 43 verfügt. Das einzelne Anschlussstück 43 ist rohrförmig ausgeführt und dient jeweils dem Aufschieben eines Endes je eines an dem Fitting 41 zu befestigenden Rohrs, wobei das jeweilige Rohr dabei auf einen Außenumfang 44 des jeweiligen Anschlussstücks 43 aufgeschoben wird. An dem jeweiligen Außenumfang 44 des einzelnen Anschlussstücks 43 ist zudem jeweils je eine umlaufende Nut 45 ausgebildet, in welcher je ein gemäß Fig. 8 gestaltetes Dichtungselement 38 platziert ist, wie in Fig. 9 bei dem rechten Anschlussstück 43 des Fittings 41 dargestellt.

Zwischen der jeweiligen Nut 45 und einem jeweiligen axialen Ende 46 des einzelnen Anschlussstücks 43, von welchem her das Aufschieben des Endes des jeweiligen Rohrs stattfindet, ist das einzelne Anschlussstück 43 zudem mit unterschiedlichen Außendurchmessern gestaltet. So weist das einzelne Anschlussstück 43 axial unmittelbar benachbart zu der jeweiligen Nut 45 einen ersten Außendurchmesser 47 auf, welcher einem Soll-Innendurchmesser des auszuschiebenden Rohrs entspricht. Dies hat zur Folge, dass beim Überschieben des Rohrendes über den ersten Außendurchmesser 47 das Rohrende auf einen kreisrunden Querschnitt mit dem geforderten Soll-Innendurchmesser kalibriert wird. Insofern dient der erste Außendurchmesser 47 einem Kalibrieren eines ansonsten unkalibrierten Rohrendes.

In Richtung des Endes 46 reduziert sich der erste Außendurchmesser 47 dann zunächst auf einen zweiten Außendurchmesser 48, welcher kleiner ist als der erste Außendurchmesser 47 und im Wesentlichen einem Außendurchmesser 49 entspricht, welchen das einzelne Anschlussstücks 43 auf einer zu dem Ende 46 entgegengesetzten liegenden Seite der Nut 45 aufweist. Im Weiteren findet dann zum Ende 46 hin eine Aufweitung von dem zweiten Außendurchmesser 48 auf einen dritten Außendurchmesser 50 statt, welcher größer ist als der zweite Außendurchmesser 48 und kleiner ist als der erste Außendurchmesser 47. Dabei ist der dritte Außendurchmesser 50 dafür vorgesehen, das Rohrende des auszuschiebenden Rohrs von einem ggf. ovalen Querschnitt, welchen das Rohrende nach einem vorgelagerten Schneidevorgang aufweisen kann, auf einen kreisrunden Querschnitt vorzukalibrieren. Der zwischenliegende, zweite Außendurchmesser 48 dient einem leichteren Aufschieben des Rohrendes auf das jeweilige Anschlussstück 43.

Wie schon bei der Variante nach den Fig. 1 bis 7, sind pro Anschlussstück 43 zudem jeweils eine Hülse 51, jeweils ein Schutzelement 52, jeweils ein Sicherungselement 53 und jeweils ein Anzeigenelement 18 vorgesehen, die jeweils radial umliegend zu dem einzelnen Anschlussstück 43 platziert und nur bei dem rechten Anschlussstück 43 in Fig. 9 gezeigt sind. Das Anzeigenelement 18 ist dabei analog zu der Variante nach den Fig. 1 bis 7 ausgeführt.

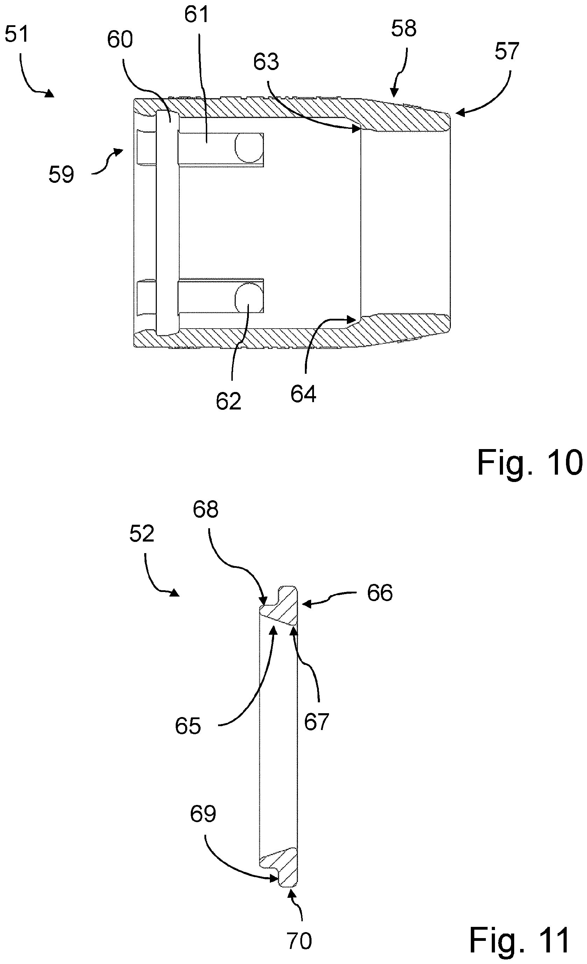

Die Hülse 51, welche einzeln in Fig. 10 in einer Schnittansicht dargestellt ist, ist auf den Grundkörper 42 auf einen radial vorstehenden Bund 54 gegen einen Anschlag 55 aufgeschoben und über eine Pressverbindung an dem Bund 54 des Grundkörpers 42 befestigt. Dabei ist die Hülse 51 radial umliegend zu dem jeweiligen Anschlussstück 43 vorgesehen und überragt dieses in axialer Richtung. Die Hülse 51 und das jeweilige Anschlussstück 43 definieren hierbei gemeinsam eine Einführöffnung 56 für das aufzuschiebende Rohr. Im Bereich dieser Einführöffnung 56 ist die Hülse 51 an ihrem hier liegenden, axialen Ende 57 mit einem konischen Abschnitt 58 ausgestattet.

Wie zudem in Fig. 10 zu erkennen ist, weist die Hülse 51 im Bereich eines zum Ende 57 entgegengesetzt liegenden, axialen Endes 59 an ihrem Innenumfang zum einen eine umlaufende Nut 60 sowie zum anderen mehrere, in Umfangsrichtung verteilte Führungsnuten 61 auf, die jeweils ausgehend von dem Ende 59 in axialer Richtung verlaufen. Am Ende jeder Führungsnut 61 ist ferner je ein Durchbruch 62 ausgestaltet. Die umlaufende Nut 60 ist dabei für die Ausbildung der Pressverbindung zwischen der Hülse 51 und dem radial vorstehenden Bund 54 des Grundkörpers 42 vorgesehen. Dagegen dienen die Führungsnuten 61 jeweils einer Führung je eines der Führungselemente 37 des radial innenliegenden Anzeigeelements 18, wie dies bereits zu der Variante nach den Fig. 1 bis 7 beschrieben worden ist.

An ihrem Innenumfang ist die Hülse 51 zudem mit einem axialen Anschlag 63 versehen, welcher in Richtung des Endes 59 orientiert ist. Dieser Anschlag 63 ist dabei durch einen radial nach innen geführten Abschnitt 64 der Hülse 51 im Bereich des Endes 57 gebildet und dient als axialer Anschlag für das radial innenliegende Sicherungselement 53.

Fig. 11 zeigt zudem eine Einzelansicht des Schutzelements 52 aus Fig. 9. Das ringförmige Schutzelement 52 ist hierbei an einem Innenumfang als Innenkonus 65 ausgebildet, welcher von seinem Verlauf her im Wesentlichen parallel zu dem konischen Abschnitt 39 des Dichtungselements 38 gestaltet ist. In der in Fig. 9 gezeigten, ersten Position der Schutzelement 52 steht das Schutzelement 52 dabei mit dem radial innenliegenden Dichtungselement 38 an dem Innenkonus 65 in Kontakt, wobei das Schutzelement 52 hierbei das Dichtungselement 38 in der umlaufenden Nut 45 hält, ohne das Dichtungselement 38 nennenswert zu komprimieren.

Im Bereich einer axialen Kontaktfläche 66, an welcher im Zuge des Aufschiebens des Rohrendes auf das Anschlussstück 43 ein Kontakt mit dem Rohrende stattfindet, weist der Innenkonus 65 einen Innendurchmesser 67 auf, welcher kleiner ist, als der Soll-Innendurchmesser des auszuschiebenden Rohrs und zumindest im Wesentlichen dem zweiten Außendurchmesser 48 des Anschlussstücks 43 entspricht. Hierdurch wird erreicht, dass das Schutzelement 52 bei einer Verschiebung aus der ersten Position in die zweite Position das Dichtungselement 38 so weit in die Nut 45 drückt, dass ein Kontakt mit einer Stirnseite des Rohrendes ausgeschlossen ist.

Entgegengesetzt zu der Kontaktfläche 66 definiert das Schutzelement 52 zudem über einen Absatz 68 eine Anlageschulter 69, an welcher das Schutzelement 52 im Zuge der Verschiebung aus der ersten Position in die zweite Position mit dem Anzeigenelement 18 in Kontakt tritt und dieses mit verschiebt. Außerdem ist das Schutzelement 52 noch an einem Außenumfang mit einem Außendurchmesser 70 ausgestattet, mit welchem es mit einer Übermaßpassung in dem radial umliegenden Sicherungselement 53 axial verschiebbar geführt ist, wie in Fig. 9 zu erkennen ist. Aufgrund der Übermaßpassung erzeugt das umliegende Sicherungselement 53 eine radiale Flächenpressung an dem innenliegenden Schutzelement 52, so dass einer axialen Verschiebung des Schutzelements 52 im Sicherungselement 53 ein Widerstand entgegengesetzt wird. Hierdurch wird sichergestellt, dass das Schutzelement 52 im Zuge der axialen Verschiebung stets in axialem Kontakt mit dem Rohr bleibt. Dadurch wird gewährleistet, dass das Schutzelement 52 dem Rohr nicht vorauseilt. Dies verhindert, dass das Schutzelement 52 das Hineindrücken des Dichtungselements 38 in die Nut 45 zu früh beendet und in der Folge der ungewollte Kontakt des Dichtungselements 38 mit der Stirnseite des Rohrs stattfinden könnte.

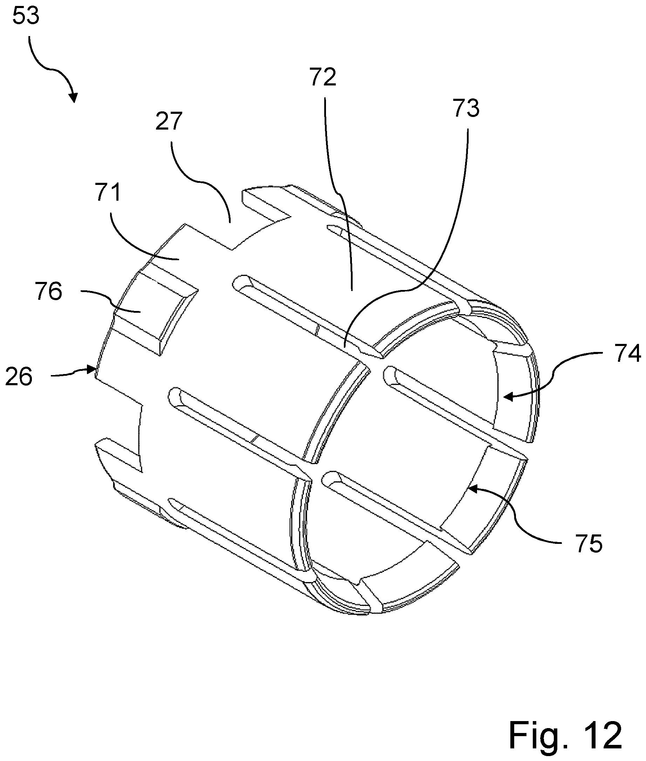

Schließlich zeigt noch Fig. 12 eine perspektivische Einzelansicht des Sicherungselements 53 aus Fig. 9. Wie hier zu erkennen ist, umfasst dieses Sicherungselement 53 dabei ähnlich wie das Sicherungselement 16 nach den Fig. 1 bis 7 einen ringförmigen Körper 71, von welchem sich ausgehend mehrere Laschen 72 axial erstrecken. Diese Laschen 72 sind dabei jeweils durch Schlitze 73 voneinander getrennt, wobei die einzelne Lasche 72 an einem entgegengesetzt zum Körper 71 liegenden Ende mit jeweils einer widerhakenähnlichen Form 74 ausgestattet ist. Im verbauten Zustand des Sicherungselements 53 sind die Laschen 72 mit ihrer jeweiligen, widerhakenähnlichen Form 74 axial in Richtung des Endes 46 orientiert, wobei eine Spitze 75 an der einzelnen, widerhakenähnlichen Form 74 dabei in Aufschieberichtung des aufzuschiebenden Rohrs orientiert ist.

Im Zuge des Aufschiebens des Rohrs werden die Laschen 72 dabei nach radial außen an die umliegenden Hülse 51 gedrückt, wobei die Spitzen 75 der Formen 74 aufgrund ihrer Orientierung ein ungewolltes Abwandern des Rohrs von dem Anschlussstück 43 unterbinden. Im Unterschied zu der Variante nach den Fig. 1 bis 7 weisen die Laschen 72 dabei aber auf einer jeweiligen, der umliegenden Hülse 51 zugewandten Seite keine Abrundung auf. Stirnseitig verhindern die Laschen 72 außerdem im Zusammenspiel mit dem Anschlag 63 der Hülse 51, dass das Sicherungselement 53 gemeinsam mit dem Rohr aus dem Fitting 41 herausgezogen werden kann.

Der ringförmige Körper 71 des Sicherungselements 53 ist analog zu dem Sicherungselement 16 aus den Fig. 1 bis 7 mit Aussparungen 27 durchsetzt, die einer Führung des Anzeigenelements 18 bei dessen gemeinsamer Verschiebung mit dem Schutzelement 52 dienen. Außerdem bildet der Körper 71 ebenfalls eine Anlagefläche 26 aus, an welcher sich das Sicherungselement 53 axial an dem umlaufenden Bund 54 des Grundkörpers 42 abstützen kann. Im Unterschied zu der Variante nach den Fig. 1 bis 7 ist der ringförmige Körper 71 des Sicherungselements 53 zudem mit mehreren radial gegenüber dem restlichen Körper 71 vorstehenden Abschnitten 76 versehen, die in Umfangsrichtung jeweils zwischen den Aussparungen 27 liegen. Über diese Abschnitte 76 wird das Sicherungselement 53 in diesem Bereich entsprechend verstärkt, wobei die Abschnitte 76 zudem im aufgeschobenen Zustand des Rohrs radial gegen die umliegende Hülse 51 drücken und damit das Sicherungselement 53 in der Hülse 51 festspannen.

Im Übrigen entspricht die Ausgestaltung des Fittings 41 nach den Fig. 9 bis 12 der Variante nach den Fig. 1 bis 7, so dass bezüglich weiterer Gestaltungen auf das zu Fig. 1 bis 7 Beschriebene Bezug genommen wird.

Mittels der erfindungsgemäßen Ausgestaltungen eines Fittings kann auch bei Einführung eines nicht kalibrierten Rohrendes eine Beschädigung eines Dichtungselements zuverlässig ausgeschlossen und gleichzeitig eine zuverlässige Funktion gewährleistet werden.

### Bezugszeichenliste

- 1: Fitting
- 2: Grundkörper
- 3: Anschlussstück
- 4: Außenumfang
- 5: Rohr
- 6: Nut
- 7: Dichtungselement
- 8: Hülse
- 9: Bund
- 10: Einführöffnung
- 11: Ende
- 12: konischer Abschnitt
- 13: Ende
- 14: Führungsnuten
- 15: Durchbruch
- 16: Sicherungselement
- 17: Schutzelement
- 18: Anzeigeelement
- 19: Körper
- 20: Laschen
- 21: Schlitze
- 22: Enden
- 23: Form
- 24: Spitzen
- 25: Abrundung
- 26: Anlagefläche
- 27: Aussparungen
- 28: Einwölbung
- 29: Einwölbung
- 30: Führungsfläche
- 31: konischer Abschnitt
- 32: zylindrischer Abschnitt
- 33: Kontaktfläche
- 34: Anlageschulter
- 35: Anlageschulter
- 36: Grundkörper
- 37: Führungselemente
- 38: Dichtungselement
- 39: konischer Abschnitt
- 40: Mulde
- 41: Fitting
- 42: Grundkörper
- 43: Anschlussstück
- 44: Außenumfang
- 45: Nut
- 46: Ende
- 47: erster Außendurchmesser
- 48: zweiter Außendurchmesser
- 49: Außendurchmesser
- 50: dritter Außendurchmesser
- 51: Hülse
- 52: Schutzelement
- 53: Sicherungselement
- 54: Bund
- 55: Anschlag
- 56: Einführöffnung
- 57: Ende
- 58: konischer Abschnitt
- 59: Ende
- 60: Nut
- 61: Führungsnuten
- 62: Durchbruch
- 63: Anschlag
- 64: Abschnitt
- 65: Innenkonus
- 66: Kontaktfläche
- 67: Innendurchmesser
- 68: Absatz
- 69: Anlageschulter
- 70: Außendurchmessers
- 71: Körper
- 72: Laschen
- 73: Schlitze
- 74: Form
- 75: Spitze
- 76: Abschnitt

## Patentansprüche

1. Fitting (1; 41), insbesondere für den Sanitärbereich, umfassend einen Grundkörper (2; 42) mit zumindest einem rohrförmigen Anschlussstück (3; 43), welches jeweils einem Aufschieben eines Endes je eines Rohrs (5) dient, wobei das zumindest eine Anschlussstück (3; 43) mit jeweils einer umlaufenden Nut (6; 45) versehen ist, in welcher je ein Dichtungselement (7; 38) platziert ist, wobei radial umliegend zum zumindest einen Anschlussstück (3; 43) jeweils ein Schutzelement (17; 52) vorgesehen ist, welches durch Aufschieben des Endes des je einen Rohres (5) axial aus einer ersten Position, in der das jeweils eine Schutzelement (17; 52) die jeweils eine Nut (6; 45) zumindest teilweise abdeckt und dabei mit dem je einen Dichtungselement (7; 38) in Kontakt steht, in eine zweite Position verschiebbar ist, in welcher das jeweils eine Schutzelement (17; 52) die jeweils eine Nut (6; 45) freigibt und der Kontakt zum je einen Dichtungselement (7; 38) aufgehoben ist, und wobei dem zumindest einen Anschlussstück (3; 43) jeweils ein Sicherungselement (16; 53) zugeordnet ist, welches einem axialen Fixieren des je einen Rohres (5) in dessen auf das zumindest eine Anschlussstück(3; 43) aufgeschobenen Endlage dient, wobei das Schutzelement (17; 52) radial innenliegend zu dem Sicherungselement (16; 53) angeordnet und dabei in dem Sicherungselement (16; 53) zwischen den Positionen axial verschiebbar geführt ist, wobei an dem Grundkörper (2; 42) je eine Hülse (8; 51) befestigt ist, die radial umliegend zu dem zumindest einen Anschlussstück (3; 43), dem je einen Schutzelement (17; 52) und dem je einen Sicherungselement (16; 53) vorgesehen ist und sich axial über das zumindest eine Anschlussstück (3; 43) hinaus erstreckt, wobei je ein Anzeigeelement (18) vorgesehen ist, welches durch Aufschieben des Endes des je einen Rohres (5) in dessen Endlage aus einer Grundstellung in eine Montagestellung bewegbar ist, und wobei ein farbiger Bestandteil des Anzeigeelements (18) nur in einer der Stellungen von außen sichtbar ist, und wobei in der je einen Hülse (8; 51) mindestens ein Durchbruch (15; 62) ausgebildet ist, über welchen der farbige Bestandteil des radial innerhalb der Hülse (8) liegenden Anzeigeelements (18) in einer seiner Stellungen von außen sichtbar ist, **dadurch gekennzeichnet, dass** das Anzeigeelement (18) mit mehreren, radial nach außen vorstehenden Führungselementen (37) versehen ist, mit welchen das Anzeigeelement (18) in Führungsnuten (14; 61) axial bewegbar geführt ist, die an einer Innenwand der Hülse (8; 51) ausgebildet sind.

2. Fitting (1) nach Anspruch 1, **dadurch gekennzeichnet, dass** das jeweils eine Schutzelement (17) an einem Innendurchmesser mit einem konischen Abschnitt (31) versehen ist, an welchem das Schutzelement (17) in der ersten Position mit dem Dichtungselement (7) in Kontakt steht, wobei der konische Abschnitt (17) sich zu einem zylindrischen Abschnitt (32) verjüngt, an welchem das Schutzelement (17) mit dem Dichtungselement (7) im Zuge der Verschiebung des Schutzelements (17) aus der ersten Position in die zweite Position in Kontakt gelangt.

3. Fitting (41) nach Anspruch 1, **dadurch gekennzeichnet, dass** das jeweils eine Schutzelement (52) an einem Innenumfang zumindest im Bereich eines axialen Endes, an welchem eine stirnseitige Kontaktfläche (66) für einen Kontakt mit dem aufzuschiebenden Rohr ausgebildet ist, als Innenkonus (65) ausgeführt ist, an welchem das Schutzelement (52) in der ersten Position mit dem Dichtungselement (38) in Kontakt steht, wobei der Innenkonus (65) an dem axialen Ende einen Innendurchmesser (67) aufweist, welcher einem Soll-Innendurchmesser des aufzuschiebenden Rohrs entspricht oder kleiner ist als der Soll-Innendurchmesser.

4. Fitting (41) nach Anspruch 2 oder 3, **dadurch gekennzeichnet, dass** das jeweils eine Schutzelement (52) an einem Außenumfang zumindest abschnittsweise einen Außendurchmesser (70) aufweist, mit welchem das jeweils eine Schutzelement (52) mit einer Übermaßpassung in dem jeweiligen, radial umliegenden Sicherungselement (53) axial verschiebbar geführt ist.

5. Fitting (1; 41) nach einem der Ansprüche 1 bis 4, **dadurch gekennzeichnet, dass** das je eine Sicherungselement (16; 53) einen ringförmigen Körper (19; 71) aufweist, an welchem in Umfangsrichtung aufeinanderfolgende und durch Schlitze (21; 73) jeweils voneinander getrennte Laschen (20; 72) axial anschließen, wobei jede einzelne Lasche (20; 72) an ihrem jeweiligen dem Körper (19; 71) abgewandt liegenden Ende (22) eine hakenartige Form (23; 74) aufweist, deren Spitze (24; 75) nach radial innen und in Aufschieberichtung des je einen Rohrs (5) ausgerichtet ist.

6. Fitting (41) nach Anspruch 5, **dadurch gekennzeichnet, dass** der ringförmige Körper (71) des je einen Sicherungselements (53) auf einem Außenumfang mit mehreren Abschnitten (76) versehen ist, die in Umfangsrichtung aufeinanderfolgend angeordnet sind und jeweils radial nach außen gegenüber einem Außendurchmesser des Körpers (71) vorstehen.

7. Fitting (1) nach Anspruch 5 oder 6, **dadurch gekennzeichnet, dass** jede einzelne Lasche (20) des je einen Sicherungselements (16) an einer radialen Außenseite je eine Abrundung (25) aufweist, mit welcher die einzelne Lasche (20) bei Aufschieben des Endes des Rohres (5) auf das zumindest eine Anschlussstück (3) flächig mit einer Innenwand der je einen Hülse (8) in Kontakt tritt.

8. Fitting (1; 41) nach Anspruch 1, **dadurch gekennzeichnet, dass** das je eine Schutzelement (17; 52) mit einer axial orientierten Anlagefläche versehen ist, an welcher das Schutzelement (17; 52) im Zuge der Verschiebung aus der ersten Position in die zweite Position mit dem Anzeigeelement (18) in Kontakt gelangt und dieses dabei aus der Grundstellung in die Montagestellung bewegt.

9. Fitting (41) nach einem der vorhergehenden Ansprüche, **dadurch gekennzeichnet, dass** das zumindest eine Anschlussstück (43) des Grundkörpers (42) axial zwischen einem axialen Ende (46), von welchem das Aufschieben des Endes des Rohrs auf das Anschlussstück (43) her stattfindet, und der jeweils einen Nut (45) zumindest abschnittsweise einen ersten Außendurchmesser (47) aufweist, welcher einem Soll-Innendurchmesser des aufzuschiebenden Rohrs entspricht.

10. Fitting (41) nach Anspruch 9, **dadurch gekennzeichnet, dass** das zumindest eine Anschlussstück (43) auf einer dem axialen Ende (46) zugewandten Seite und axial benachbart zu der jeweils einen Nut (45) mit dem ersten Außendurchmesser (47) versehen ist, wobei sich der erste Außendurchmesser (47) in Richtung des axialen Endes (46) zunächst auf einen zweiten Außendurchmesser (48) reduziert und anschließend zu dem axialen Ende (46) hin auf einen dritten Außendurchmesser (50) aufweitet, welcher zwischen dem ersten Außendurchmesser (47) und dem zweiten Außendurchmesser (48) liegt.

11. Fitting (1; 41) nach einem der vorhergehenden Ansprüche, **dadurch gekennzeichnet, dass** mehrere rohrförmige Anschlussstücke (3; 43) am Grundkörper (2; 42) vorgesehen sind, die jeweils dem Aufschieben eines Endes je eines Rohrs (5) dienen.

## Claims

1. Fitting (1; 41), in particular for the sanitary sector, comprising a main body (2; 42) with at least one tubular connection piece (3; 43) which serves in each case to have one end of a respective pipe (5) pushed onto it, wherein the at least one connection piece (3; 43) is provided in each case with an encircling slot (6; 45) in which a respective seal element (7; 38) is positioned, wherein, radially surrounding the at least one connection piece (3; 43), a respective protective element (17; 52) is provided, which, as a result of the end of the respective pipe (5) being pushed on, is able to be displaced axially from a first position, in which the respective protective element (17; 52) at least partially covers the respective slot (6; 45) and is then in contact with the respective seal element (7; 38), into a second position, in which the respective protective element (17; 52) frees up the respective slot (6; 45) and the contact with the respective seal element (7; 38) is reversed, and wherein the at least one connection piece (3; 43) is assigned a respective securing element (16; 53) which serves to axially fix the respective pipe (5) in its end position pushed onto the at least one connection piece (3; 43), wherein the protective element (17; 52) is arranged radially on the inside of the securing element (16; 53) and is guided in the securing element (16; 53) so as to be axially displaceable between the positions, wherein a respective sleeve (8; 51) is fastened to the main body (2; 42), the respective sleeve (8; 51) being provided so as to radially surround the at least one connection piece (3; 43), the respective protective element (17; 52) and the respective securing element (16; 53) and extending axially beyond the at least one connection piece (3; 43), wherein a respective display element (18) is provided which, as a result of the end of the respective pipe (5) being pushed on, is movable in the end position thereof from a basic position into an assembly position, and wherein a coloured component of the display element (18) is visible from the outside only in one of the positions, and wherein in the respective sleeve (8; 51), at least one aperture (15; 62) is formed, via which the coloured component of the display element (18) located radially inside the sleeve (8) is visible from the outside in one of the positions thereof, **characterized in that** the display element (18) is provided with a plurality of guide elements (37) which protrude radially outwardly and with which the display element (18) is guided so as to be axially movable in guide slots (14; 61) that are formed in an inner wall of the sleeve (8; 51).

2. Fitting (1) according to Claim 1, **characterized in that** the respective protective element (17) is provided at an inside diameter with a conical portion (31) at which the protective element (17) is in contact in the first position with the seal element (7), wherein the conical portion (17) narrows to a cylindrical portion (32) at which the protective element (17) passes into contact with the seal element (7) in the course of the displacement of the protective element (17) from the first position into the second position.

3. Fitting (41) according to Claim 1, **characterized in that** the respective protective element (52) is embodied, at an inner circumference, at least in the region of an axial end at which a terminal contact face (66) for contact with the pipe to be pushed on is formed, as an inner cone (65) at which the protective element (52) is in contact in the first position with the seal element (38), wherein the inner cone (65) has, at the axial end, an inside diameter (67) which corresponds to a desired inside diameter of the pipe to be pushed on or is smaller than the desired inside diameter.

4. Fitting (41) according to Claim 2 or 3, **characterized in that** a respective protective element (52) has at least partially, at an outer circumference, an outside diameter (70) with which the respective protective element (52) is guided with an interference fit so as to be axially displaceable in the respective, radially surrounding securing element (53).

5. Fitting (1; 41) according to one of Claims 1 to 4, **characterized in that** the respective securing element (16; 53) has an annular body (19; 71) which is adjoined axially by tabs (20; 72) that follow one another in the circumferential direction and are each separated from one another by slits (21; 73), wherein each individual tab (20; 72) has, at its respective end (22) remote from the body (19; 71), a hook-like shape (23; 74), the tip (24; 75) of which is oriented radially inwardly and in the push-on direction of the respective pipe (5).

6. Fitting (41) according to Claim 5, **characterized in that** the annular body (71) of the respective securing element (53) is provided, on an outer circumference, with a plurality of portions (76) which are arranged so as to follow one another in the circumferential direction and each protrude radially outwardly with respect to an outside diameter of the body (71).

7. Fitting (1) according to Claim 5 or 6, **characterized in that** each individual tab (20) of the respective securing element (16) has, on a radially outer side, a respective rounded portion (25) with which the individual tab (20) passes into surface contact with an inner wall of the respective sleeve (8) when the end of the pipe (5) is pushed onto the at least one connection piece (3).

8. Fitting (1; 41) according to Claim 1, **characterized in that** the respective protective element (17; 52) is provided with an axially oriented contact face at which the protective element (17; 52) passes into contact with the display element (18) during the displacement from the first position into the second position, and in the process moves the display element (18) from the basic position into the assembly position.

9. Fitting (41) according to one of the preceding claims, **characterized in that** the at least one connection piece (43) of the main body (42) at least partially has, axially between an axial end (46), from which the end of the pipe is pushed onto the connection piece (43), and the respective slot (45), a first outside diameter (47), which corresponds to a desired inside diameter of the pipe to be pushed on.

10. Fitting (41) according to Claim 9, **characterized in that** the at least one connection piece (43) is provided, on a side facing the axial end (46), and axially next to the respective slot (45), with the first outside diameter (47), wherein the first outside diameter (47), in the direction of the axial end (46), first of all reduces to a second outside diameter (48) and then widens, towards the axial end (46), to a third outside diameter (50) which lies between the first outside diameter (47) and the second outside diameter (48).

11. Fitting (1; 41) according to one of the preceding claims, **characterized in that** a plurality of tubular connection pieces (3; 43) are provided on the main body (2; 42), which each serve to have one end of a respective pipe (5) pushed onto them.

## Revendications

1. Raccord (1 ; 41), notamment pour le domaine sanitaire, comprenant un corps de base (2 ; 42) avec au moins une pièce de raccordement tubulaire (3 ; 43), qui sert respectivement à l'enfilage d'une extrémité d'un tube (5), l'au moins une pièce de raccordement (3 ; 43) étant pourvue respectivement d'une rainure périphérique (6 ; 45), dans laquelle est placé à chaque fois un élément d'étanchéité (7 ; 38), un élément de protection (17 ; 52) étant respectivement prévu radialement autour de l'au moins une pièce de raccordement (3 ; 43) qui, par enfilage de l'extrémité du tube (5) respectif, peut être coulissé axialement d'une première position, dans laquelle l'élément de protection (17 ; 52) respectif recouvre au moins partiellement la rainure (6 ; 45) respective et est alors en contact avec l'élément d'étanchéité (7 ; 38) respectif, à une deuxième position, dans laquelle l'élément de protection (17 ; 52) respectif libère la rainure (6 ; 45) respective et le contact avec l'élément d'étanchéité (7 ; 38) respectif est supprimé, et l'au moins une pièce de raccordement (3 ; 43) étant respectivement associée à un élément de sécurisation (16 ; 53) qui sert à fixer axialement le tube (5) respectif dans sa position finale enfilée sur l'au moins une pièce de raccordement (3 ; 43), l'élément de protection (17 ; 52) étant agencé radialement à l'intérieur par rapport à l'élément de sécurisation (16 ; 53) et étant guidé dans l'élément de sécurisation (16 ; 53) de manière à pouvoir coulisser axialement entre les positions, une douille (8 ; 51) étant fixée à chaque fois sur le corps de base (2 ; 42), qui est prévue radialement autour de l'au moins une pièce de raccordement (3 ; 43), de l'élément de protection (17 ; 52) respectif et de l'élément de sécurisation (16 ; 53) respectif et s'étend axialement au-delà de l'au moins une pièce de raccordement (3 ; 43), un élément d'affichage (18) étant prévu à chaque fois, lequel peut être déplacé d'une position de base à une position de montage par enfilage de l'extrémité du tube (5) respectif dans sa position finale, et un constituant coloré de l'élément d'affichage (18) n'étant visible de l'extérieur que dans l'une des positions, et au moins une percée (15 ; 62) étant réalisée dans la douille (8 ; 51) respective, par l'intermédiaire de laquelle le constituant coloré de l'élément d'affichage (18) situé radialement à l'intérieur de la douille (8) est visible de l'extérieur dans l'une de ses positions, **caractérisé en ce que** l'élément d'affichage (18) est pourvu de plusieurs éléments de guidage (37) faisant saillie radialement vers l'extérieur, avec lesquels l'élément d'affichage (18) est guidé de manière à pouvoir se déplacer axialement dans des rainures de guidage (14 ; 61), qui sont réalisées sur une paroi intérieure de la douille (8 ; 51).

2. Raccord (1) selon la revendication 1, **caractérisé en ce que** l'élément de protection (17) respectif est pourvu, sur un diamètre intérieur, d'une section conique (31) au niveau de laquelle l'élément de protection (17) est en contact avec l'élément d'étanchéité (7) dans la première position, la section conique (17) se rétrécissant en une section cylindrique (32) au niveau de laquelle l'élément de protection (17) entre en contact avec l'élément d'étanchéité (7) au cours du coulissement de l'élément de protection (17) de la première position à la deuxième position.

3. Raccord (41) selon la revendication 1, **caractérisé en ce qu'**au moins dans la zone d'une extrémité axiale sur laquelle est réalisée une surface de contact frontale (66) pour un contact avec le tube à enfiler, l'élément de protection (52) respectif est conçu sous forme de cône intérieur (65) sur une circonférence intérieure, au niveau duquel l'élément de protection (52) est en contact avec l'élément d'étanchéité (38) dans la première position, le cône intérieur (65) présentant à l'extrémité axiale un diamètre intérieur (67) qui correspond à un diamètre intérieur de consigne du tube à enfiler ou qui est inférieur au diamètre intérieur de consigne.

4. Raccord (41) selon la revendication 2 ou 3, **caractérisé en ce que** l'élément de protection (52) respectif présente sur une circonférence extérieure, au moins par sections, un diamètre extérieur (70) avec lequel l'élément de protection (52) respectif est guidé de manière à pouvoir coulisser axialement avec un ajustement serré dans l'élément de sécurisation (53) respectif qui l'entoure radialement.

5. Raccord (1 ; 41) selon l'une quelconque des revendications 1 à 4, **caractérisé en ce que** l'élément de sécurisation (16 ; 53) respectif présente un corps annulaire (19 ; 71) sur lequel se raccordent axialement des pattes (20 ; 72) successives dans la direction circonférentielle et séparées respectivement les unes des autres par des fentes (21 ; 73), chaque patte individuelle (20 ; 72) présentant, à son extrémité (22) respective détournée du corps (19 ; 71), une forme de crochet (23 ; 74) dont la pointe (24 ; 75) est orientée radialement vers l'intérieur et dans la direction d'enfilage du tube (5) respectif.

6. Raccord (41) selon la revendication 5, **caractérisé en ce que** le corps annulaire (71) de l'élément de sécurisation (53) respectif est pourvu, sur une circonférence extérieure, de plusieurs sections (76) qui sont agencées successivement dans la direction circonférentielle et qui font respectivement saillie radialement vers l'extérieur par rapport à un diamètre extérieur du corps (71).

7. Raccord (1) selon la revendication 5 ou 6, **caractérisé en ce que** chaque patte individuelle (20) de l'élément de sécurisation (16) respectif présente à chaque fois, sur un côté extérieur radial, un arrondi (25) par lequel la patte individuelle (20), lors de l'enfilage de l'extrémité du tube (5) sur l'au moins une pièce de raccordement (3), entre en contact à plat avec une paroi intérieure de la douille (8) respective.

8. Raccord (1 ; 41) selon la revendication 1, **caractérisé en ce que** l'élément de protection (17 ; 52) respectif est pourvu d'une surface d'appui orientée axialement, sur laquelle l'élément de protection (17 ; 52) entre en contact avec l'élément d'affichage (18) au cours du coulissement de la première position à la deuxième position et déplace celui-ci de la position de base à la position de montage.

9. Raccord (41) selon l'une quelconque des revendications précédentes, **caractérisé en ce que** l'au moins une pièce de raccordement (43) du corps de base (42) présente axialement entre une extrémité axiale (46), à partir de laquelle a lieu l'enfilage de l'extrémité du tube sur la pièce de raccordement (43), et la rainure (45) respective, au moins par sections, un premier diamètre extérieur (47) qui correspond à un diamètre intérieur de consigne du tube à enfiler.

10. Raccord (41) selon la revendication 9, **caractérisé en ce que** l'au moins une pièce de raccordement (43) est pourvue du premier diamètre extérieur (47) sur un côté tourné vers l'extrémité axiale (46) et axialement au voisinage de la rainure (45) respective, le premier diamètre extérieur (47) se réduisant d'abord, en direction de l'extrémité axiale (46), à un deuxième diamètre extérieur (48) et s'élargissant ensuite, vers l'extrémité axiale (46), à un troisième diamètre extérieur (50) qui se situe entre le premier diamètre extérieur (47) et le deuxième diamètre extérieur (48).

11. Raccord (1 ; 41) selon l'une quelconque des revendications précédentes, **caractérisé en ce que** plusieurs pièces de raccordement tubulaires (3 ; 43) sont prévues sur le corps de base (2 ; 42), qui servent chacune à enfiler une extrémité d'un tube (5) respectif.
